# FASCICULE DE BREVET EUROPEEN

(11) **EP 2 470 483 B1**
(45) Date de publication et mention de la délivrance du brevet: **13.03.2019**
(21) Numéro de dépôt: 10762736.6
(22) Date de dépôt: 18.08.2010
(51) Int. Cl.: C03C 17/36

(54) **SUBSTRAT MUNI D'UN EMPILEMENT A PROPRIETES THERMIQUES, EN PARTICULIER POUR REALISER UN VITRAGE CHAUFFANT**
SUBSTRAT MIT EINER MEHRLAGIGEN STRUKTUR MIT THERMISCHEN EIGENSCHAFTEN, IM BESONDEREN ZUR HERSTELLUNG VON BEHEIZTEN GLASSCHEIBEN
SUBSTRATE PROVIDED WITH A MULTILAYER STRUCTURE HAVING THERMAL PROPERTIES, IN PARTICULAR FOR PRODUCING HEATED GLAZING

(30) Priorité: 21.08.2009 FR 0955744
(43) Date de publication de la demande: 04.07.2012
(73) Titulaire: Saint-Gobain Glass France, 92400 Courbevoie (FR)
(72) Inventeur: LAURENT, Stéphane, 92110 Clichy (FR); DRESE, Robert, 52062 Aachen (DE); BILLERT, Ulrich, F-78170 La Celle Saint-cloud (FR)
(74) Mandataire: Saint-Gobain Recherche
(86) Numéro de dépôt international: PCT/FR2010/051732
(87) Numéro de publication internationale: WO 2011/020974

(56) Documents cités:
- WO-A1-2006/029073
- WO-A1-2008/065962
- US-A1- 2006 046 073

## Description

L'invention concerne un substrat transparent notamment en un matériau rigide minéral comme le verre, ledit substrat étant revêtu d'un empilement de couches minces comprenant plusieurs couches fonctionnelles pouvant agir sur le rayonnement solaire et/ou le rayonnement infrarouge de grande longueur d'onde.

L'invention concerne plus particulièrement un substrat, notamment un substrat verrier transparent, muni d'un empilement de couches minces comportant une alternance de « n » couches fonctionnelles métalliques, notamment de couches fonctionnelles à base d'argent ou d'alliage métallique contenant de l'argent, et de « (n + 1) » revêtements antireflet, avec n nombre entier ≥ 3, de manière à ce que chaque couche fonctionnelle soit disposée entre deux revêtements antireflet. Chaque revêtement comporte au moins une couche antireflet et chaque revêtement étant, de préférence, composé d'une pluralité de couches, dont une couche au moins, voire chaque couche, est une couche antireflet.

L'invention concerne plus particulièrement l'utilisation de tels substrats pour fabriquer des vitrages d'isolation thermique et/ou de protection solaire. Ces vitrages peuvent être destinés aussi bien à équiper les bâtiments que les véhicules, en vue notamment de diminuer l'effort de climatisation et/ou d'empêcher une surchauffe excessive (vitrages dits « de contrôle solaire ») et/ou diminuer la quantité d'énergie dissipée vers l'extérieur (vitrages dits « bas émissifs ») entraînée par l'importance toujours croissante des surfaces vitrées dans les bâtiments et les habitacles de véhicules.

Ces substrats peuvent en particulier être intégrés dans des dispositifs électroniques et l'empilement peut alors servir d'électrode pour la conduction d'un courant (dispositif éclairant, dispositif d'affichage, panneau voltaïque, vitrage électrochrome, ...) ou peuvent être intégrés dans des vitrages présentant des fonctionnalités particulières, comme par exemple des vitrages chauffants et en particulier des pare-brise chauffants de véhicule.

Au sens de la présente invention, un empilement à plusieurs couches fonctionnelles s'entend d'un empilement comportant au moins trois couches fonctionnelles.

Des empilements de couches à plusieurs couches fonctionnelles sont connus.

Dans ce type d'empilement, chaque couche fonctionnelle se trouve disposée entre deux revêtements antireflet comportant chacun en général plusieurs couches antireflet qui sont chacune en un matériau du type nitrure et notamment nitrure de silicium ou d'aluminium et/ou du type oxyde. Du point de vue optique, le but de ces revêtements qui encadrent la couche fonctionnelle est « d'antirefléter » cette couche fonctionnelle.

Un revêtement de blocage très fin est toutefois intercalé parfois entre un ou chaque revêtement antireflet et une couche fonctionnelle adjacente : un revêtement de blocage disposé sous la couche fonctionnelle en direction du substrat et un revêtement de blocage disposé sur la couche fonctionnelle à l'opposé du substrat et qui protège cette couche d'une éventuelle dégradation lors du dépôt du revêtement antireflet supérieur et lors d'un éventuel traitement thermique à haute température, du type bombage et/ou trempe.

L'art antérieur connaît par exemple de la demande internationale de brevet N° WO 2005/051858 des empilements à plusieurs couches fonctionnelles.

Dans les empilements à trois ou quatre couches fonctionnelles présentés dans ce document, les épaisseurs de toutes les couches fonctionnelles sont sensiblement identiques, c'est-à-dire que l'épaisseur de la première couche fonctionnelle, la plus proche du substrat, est sensiblement identique à l'épaisseur de la deuxième couche fonctionnelle qui est sensiblement identique à l'épaisseur de la troisième couche fonctionnelle, voire qui est sensiblement identique à l'épaisseur de la quatrième couche fonctionnelle lorsqu'il y a une quatrième couche fonctionnelle. Voir par exemples les exemples 11 et 12 de ce document.

Ce document présente par ailleurs un exemple, l'exemple 14, dans lequel l'épaisseur de la première couche fonctionnelle, la plus proche du substrat, est inférieure à l'épaisseur de la deuxième couche fonctionnelle qui est elle-même inférieure à l'épaisseur de la troisième couche fonctionnelle, suivant en cela l'enseignement de la demande de brevet européen N° EP 645 352.

Cette demande de brevet européen N° EP 645 352 enseigne qu'un empilement à trois couches fonctionnelles métalliques qui sont disposées avec leur épaisseur croissante en partant du substrat permet d'obtenir une couleur en réflexion extérieure (c'est-à-dire sur un côté du substrat opposé à celui qui porte l'empilement de couches minces) qui soit neutre.

Toutefois, il apparaît que la configuration de l'exemple 14 de la demande N° WO 2005/051858 ne donne pas entièrement satisfaction pour un vitrage feuilleté.

Il apparaît que positionner trois couches fonctionnelles métalliques avec leur épaisseur croissante en partant du substrat permet effectivement d'obtenir une couleur en réflexion extérieure plus neutre, mais il apparaît par ailleurs que la résistance surfacique de l'empilement, tant de l'exemple 14 que des exemples 11 et 12, à épaisseur totale d'argent identique, pourrait être améliorée et que par conséquent les propriétés associées pourrait être améliorée (réflexion énergétique augmentée, en particulier à transmission lumineuse constante, résistance par carré de l'empilement augmentée) .

Le but de l'invention est ainsi de fournir un empilement qui présente une très faible résistance par carré afin en particulier que le vitrage intégrant cet empilement puisse présenter une haute réflexion énergétique et/ou une très basse émissivité et/ou être chauffé par application d'un courant entre deux bus-barres électriquement raccordées à l'empilement, ainsi qu'une transmission lumineuse élevée et une couleur relativement neutre, en particulier en configuration feuilletée, et que ces propriétés soient de préférence obtenues après un (ou des) traitement(s) thermique(s) à haute température du type bombage et/ou trempe et/ou recuit, voire que ces propriétés soient conservées dans une plage restreinte que l'empilement subisse ou non un (ou de) tel(s) traitement(s) thermique(s).

L'invention a ainsi pour objet, dans son acception la plus large, un substrat, notamment substrat verrier transparent, selon la revendication 1. Ce substrat est muni d'un empilement de couches minces comportant une alternance de « n » couches fonctionnelles métalliques, notamment de couches fonctionnelles à base d'argent ou d'alliage métallique contenant de l'argent, et de « (n + 1) » revêtements antireflet, avec n nombre entier = 3 ou 4, chaque revêtement antireflet comportant au moins une couche antireflet, de manière à ce que chaque couche fonctionnelle soit disposée entre deux revêtements antireflet. L'épaisseur eₓ de chaque couche fonctionnelle de l'empilement (c'est-à-dire au moins des couches fonctionnelles de rang 2 et de rang 3 en partant du substrat) est ainsi inférieure à l'épaisseur de la couche fonctionnelle précédente en direction du substrat et est telle que : eₓ = α eₓ₋₁, avec x qui est le rang de la couche fonctionnelle en partant du substrat, x-1 qui est le rang de la couche fonctionnelle précédente en direction du substrat et α qui est un nombre tel que 0,55 ≤ α ≤ 0,95, voire 0,6 ≤ α ≤ 0,95.

Par « rang » au sens de la présente invention, on entend la numérotation en nombre entier de chaque couche fonctionnelle en partant du substrat : la couche fonctionnelle la plus proche du substrat étant la couche fonctionnelle de rang 1, la suivante en s'éloignant du substrat étant celle de rang 2, etc.

L'épaisseur de la première couche métallique fonctionnelle en partant du substrat (celle de rang 1) est telle que : 10 ≤ e₁ ≤ 18 en nm et de préférence 11 ≤ e₁ ≤ 15 en nm.

Ainsi, lorsque 0,55 ≤ α ≤ 0,95, l'épaisseur de la première couche métallique fonctionnelle en partant du substrat est telle que : 10 ≤ e1 ≤ 18 en nm et de préférence 11 ≤ e₁ ≤ 15 en nm et lorsque 0,6 ≤ α ≤ 0,95, l'épaisseur de la première couche métallique fonctionnelle en partant du substrat est telle que : 10 ≤ e₁ ≤ 18 en nm et de préférence 11 ≤ e₁ ≤ 15 en nm.

Il est par ailleurs possible que 0,6 ≤ α ≤ 0,9 et que l'épaisseur de la première couche métallique fonctionnelle en partant du substrat soit telle que : 10 ≤ e₁ ≤ 18 en nm et de préférence 11 ≤ e₁ ≤ 15 en nm, voire que 0,6 ≤ α ≤ 0,85 et que l'épaisseur de la première couche métallique fonctionnelle en partant du substrat soit telle que : 10 ≤ e₁ ≤ 18 en nm et de préférence 11 ≤ e₁ ≤ 15 en nm.

Par ailleurs, en raison du fait qu'un but essentiel de l'invention est de parvenir à un empilement présentant une faible résistance par carré, l'épaisseur totale des couches métalliques fonctionnelles est, notamment lorsque 11 ≤ e₁ ≤ 15 en nm, de préférence supérieure à 30 nm et est notamment comprise entre 30 et 60 nm en incluant ces valeurs, voire cette épaisseur totale est comprise entre 35 et 50 nm pour un empilement de couches minces à trois couches fonctionnelles, voire cette épaisseur totale est comprise entre 40 et 60 nm pour un empilement de couches minces à quatre couches fonctionnelles.

De préférence, la valeur de α est différente (d'au moins 0,02) pour toutes les couches fonctionnelles de rang 2 et plus de l'empilement auxquelles la formule ci-dessus est appliquée.

Il est important de constater ici que la décroissance dans la distribution des épaisseurs qui fait l'objet de l'invention n'est pas une décroissance dans la distribution de toutes les couches de l'empilement (en prenant en compte les couches antireflet), mais uniquement une décroissance dans la distribution des épaisseurs des couches fonctionnelles.

A l'intérieur de l'empilement selon l'invention à épaisseur de couches fonctionnelles décroissantes en partant du substrat, toutes les couches fonctionnelles présentent des épaisseurs différentes ; toutefois, la distribution dans l'épaisseur des couches fonctionnelles à l'intérieur de l'empilement permet, d'une manière complètement surprenante, d'obtenir une meilleure résistance par carré que dans la configuration à épaisseur de couches fonctionnelles constantes ou à épaisseur de couches fonctionnelles croissantes en partant du substrat.

Sauf mention contraire, les épaisseurs évoquées dans le présent document sont des épaisseurs physiques, ou réelles (et non pas des épaisseurs optiques).

Par ailleurs, lorsqu'il est fait état d'un positionnement vertical d'une couche (ex. : en dessous /au-dessus), c'est toujours en considérant que le substrat porteur est positionné horizontalement, en bas, avec l'empilement au-dessus de lui ; Lorsqu'il est précisé qu'une couche est déposée directement sur une autre, cela signifie qu'il ne peut y avoir une (ou plusieurs) couche(s) intercalée(s) entre ces deux couches. Le rang des couches fonctionnelles est ici toujours défini en partant du substrat porteur de l'empilement (substrat sur la face duquel est déposé l'empilement).

La couche antireflet qui est au minimum comprise dans chaque revêtement antireflet, comme défini ci-avant, présente un indice optique mesuré, comme habituellement, à 550 nm compris entre 1,8 et 2,5 en incluant ces valeurs, ou, de préférence, entre 1,9 et 2,3 en incluant ces valeurs, c'est-à-dire un indice optique que l'on peut considérer comme haut.

Dans une variante particulière, la dernière couche du premier revêtement antireflet sous-jacent à la première couche fonctionnelle en partant du substrat est une couche de mouillage à base d'oxyde cristallisé (i.e. : non amorphe), notamment à base d'oxyde de zinc, éventuellement dopé à l'aide d'au moins un autre élément, comme l'aluminium et ce premier revêtement antireflet sous-jacent à la première couche fonctionnelle comporte une couche de lissage, en un oxyde mixte non cristallisé, ladite couche de lissage étant en contact avec ladite couche de mouillage sus-jacente.

Dans cette variante particulière, l'épaisseur de ladite couche de lissage représente, de préférence, environ 1/6^{e} de l'épaisseur dudit premier revêtement antireflet et environ la moitié de l'épaisseur de ladite première couche fonctionnelle.

Dans une autre variante particulière, lesdits revêtements antireflet comportent chacun au moins une couche à base de nitrure de silicium, éventuellement dopé à l'aide d'au moins un autre élément, comme l'aluminium, et de préférence chaque revêtement antireflet comportent chacun au moins une couche à base de nitrure de silicium, éventuellement dopé à l'aide d'au moins un autre élément, comme l'aluminium.

Dans cette autre variante particulière, la dernière couche de chaque revêtement antireflet sous-jacent à une couche fonctionnelle est une couche de mouillage à base d'oxyde cristallisé, notamment à base d'oxyde de zinc, éventuellement dopé à l'aide d'au moins un autre élément, comme l'aluminium.

Toutefois, dans cette autre variante particulière, au moins un revêtement antireflet sous-jacent à une couche fonctionnelle, et de préférence chaque revêtement antireflet sous-jacent à une couche fonctionnelle, comprend au moins une couche de lissage, en un oxyde mixte non cristallisé, ladite couche de lissage étant en contact avec une couche de mouillage sus-jacente.

L'épaisseur de chaque couche fonctionnelle est, de préférence, comprise entre 8 et 20 nm en incluant ces valeurs, voire entre 10 et 18 en nm en incluant ces valeurs, et de préférence encore entre 11 et 15 en nm en incluant ces valeurs.

L'empilement selon l'invention est un empilement à basse résistance par carré de telle sorte que sa résistance par carré R en ohms par carré est, de préférence, égale ou inférieure à 1 ohm par carré après un éventuel traitement thermique du type bombage, trempe ou recuit, voire même égale ou inférieure à 1 ohm avant traitement thermique car tel traitement a en général pour effet de diminuer la résistance par carré.

La présente invention se rapporte par ailleurs au vitrage incorporant au moins un substrat selon l'invention, éventuellement associé à au moins un autre substrat et notamment vitrage multiple du type double-vitrage ou triple vitrage ou vitrage feuilleté et en particulier vitrage feuilleté comportant des moyens pour la connexion électrique de l'empilement de couches minces afin de permettre de réaliser un vitrage feuilleté chauffant, ledit substrat porteur de l'empilement pouvant être bombé et/ou trempé.

Chaque substrat du vitrage peut être clair ou coloré. Un des substrats au moins notamment peut être en verre coloré dans la masse. Le choix du type de coloration va dépendre du niveau de transmission lumineuse et/ou de l'aspect colorimétrique recherchés pour le vitrage une fois sa fabrication achevée.

Le vitrage selon l'invention peut présenter une structure feuilletée, associant notamment au moins deux substrats rigides du type verre par au moins une feuille de polymère thermoplastique, afin de présenter une structure de type verre/empilement de couches minces/feuille(s)/verre. Le polymère peut notamment être à base de polyvinylbutyral PVB, éthylène vinylacétate EVA, polyéthylène téréphtalate PET, polychlorure de vinyle PVC.

Le vitrage peut alors présenter une structure de type : verre/empilement de couches minces/feuille(s) de polymère/verre.

Les vitrages selon l'invention sont aptes à subir un traitement thermique sans dommage pour l'empilement de couches minces. Ils sont donc éventuellement bombés et/ou trempés.

Le vitrage peut être bombé et/ou trempé en étant constitué d'un seul substrat, celui muni de l'empilement. Il s'agit alors d'un vitrage dit « monolithique ». Dans le cas où ils sont bombés, notamment en vue de constituer des vitrages pour véhicules, l'empilement de couches minces se trouve de préférence sur une face au moins partiellement non plane.

Le vitrage peut aussi être un vitrage multiple, notamment un double-vitrage, au moins le substrat porteur de l'empilement pouvant être bombé et/ou trempé. Il est préférable dans une configuration de vitrage multiple que l'empilement soit disposé de manière à être tourné du côté de la lame de gaz intercalaire. Dans une structure feuilletée, le substrat porteur de l'empilement peut être en contact avec la feuille de polymère.

Le vitrage peut aussi être un triple vitrage constitué de trois feuilles de verre séparée deux par deux par une lame de gaz. Dans une structure en triple vitrage, le substrat porteur de l'empilement peut être en face 2 et/ou en face 5, lorsque l'on considère que le sens incident de la lumière solaire traverse les faces dans l'ordre croissant de leur numéro.

Lorsque le vitrage est monolithique ou multiple du type double-vitrage, triple vitrage ou vitrage feuilleté, au moins le substrat porteur de l'empilement peut être en verre bombé ou trempé, ce substrat pouvant être bombé ou trempé avant ou après le dépôt de l'empilement.

L'invention concerne en outre l'utilisation du substrat selon l'invention, pour réaliser un vitrage à haute réflexion énergétique et/ou un vitrage à très basse émissivité et /ou un vitrage chauffant avec un revêtement transparent chauffant par effet Joule.

L'invention concerne en outre l'utilisation du substrat selon l'invention, pour réaliser une électrode transparente d'un vitrage électrochrome ou d'un dispositif d'éclairage ou d'un dispositif de visualisation ou d'un panneau photovoltaïque.

Le substrat selon l'invention peut-être en particulier utilisé pour réaliser un substrat à haute réflexion énergétique et/ou un substrat à très basse émissivité et /ou un revêtement transparent chauffant d'un vitrage chauffant.

Le substrat selon l'invention peut-être en particulier utilisé pour réaliser une électrode transparente d'un vitrage électrochrome (ce vitrage étant monolithique ou étant multiple du type double-vitrage ou triple vitrage ou vitrage feuilleté) ou d'un dispositif d'éclairage ou d'un écran de visualisation ou d'un panneau photovoltaïque. (« transparent » est à comprendre ici dans ces précédents paragraphes comme « non opaque »).

L'empilement selon l'invention permet, à épaisseur totale de couche fonctionnelle identique, d'obtenir une résistance par carrée plus faible que lorsque les épaisseurs des couches fonctionnelles sont toutes à peu près identiques dans l'empilement ou que lorsque les épaisseurs des couches fonctionnelles sont disposées dans un ordre d'épaisseurs croissant en partant du substrat.

En effet, il est apparu que l'apport de chaque couche fonctionnelle dans la résistance complète de l'empilement n'est pas uniforme ; d'une manière surprenante, il a été découvert que la première couche fonctionnelle contribue pour près de la moitié à la résistance complète de l'empilement. Plus la première couche fonctionnelle est épaisse, plus la résistance par carré de l'empilement sera faible comparativement à des empilements ayant la même épaisseur totale de couche fonctionnelle. C'est la raison pour laquelle α ≤ 0,95.

Opérer, comme indiqué par l'invention, une distribution décroissante des épaisseurs des couches fonctionnelles en partant du substrat permet d'obtenir une résistance par carré de l'empilement très faible, tout en obtenant une variation de couleur en réflexion en fonction de l'angle certes moins bonne qu'avec une distribution croissante des épaisseurs mais en obtenant toute de même une variation de couleur en réflexion en fonction de l'angle qui est acceptable.

Toutefois, il est important que la différence d'épaisseur d'une couche fonctionnelle à l'autre en direction du substrat ou à l'opposé du substrat ne soit pas trop importante. C'est la raison pour laquelle α ≥ 0,55, voire α ≥ 0,6.

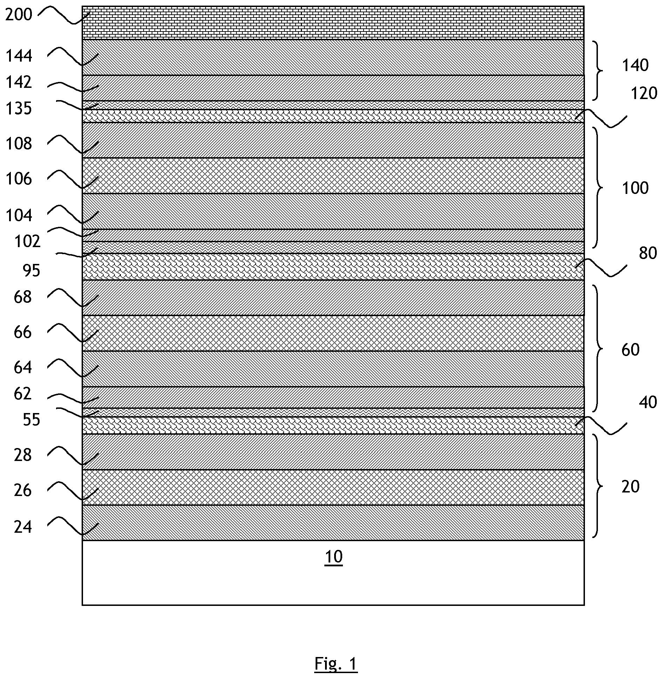

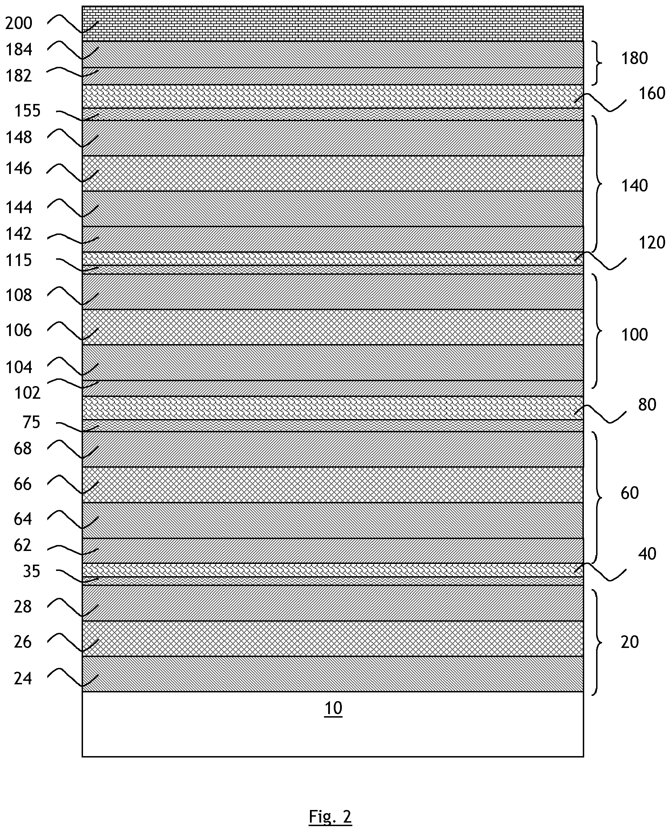

Les détails et caractéristiques avantageuses de l'invention ressortent des exemples non limitatifs suivants, illustrés à l'aide des figures ci-jointes illustrant
- en figure 1, un empilement à trois fonctionnelles selon l'invention, chaque couche fonctionnelle n'étant pas pourvue d'un revêtement de sous-blocage mais étant pourvue d'un revêtement de sur-blocage et l'empilement étant en outre pourvu d'un revêtement de protection optionnel ; et
- en figure 2, un empilement à quatre fonctionnelles selon l'invention, chaque couche fonctionnelle étant pourvue d'un revêtement de sous-blocage mais pas d'un revêtement de sur-blocage et l'empilement étant en outre pourvu d'un revêtement de protection optionnel.

Dans les figures 1 et 2, les proportions entre les épaisseurs des différentes couches ne sont pas rigoureusement respectées afin de faciliter leur lecture.

La figure 1 illustre une structure d'empilement à trois couches fonctionnelles 40, 80, 120, cette structure étant déposée sur un substrat 10 verrier, transparent.

Chaque couche fonctionnelle 40, 80, 120, est disposée entre deux revêtements antireflet 20, 60, 100, 140, de telle sorte que la première couche fonctionnelle 40 en partant du substrat est disposée entre les revêtements antireflet 20, 60 ; la deuxième couche fonctionnelle 80 est disposée entre les revêtements antireflet 60, 100 et la troisième couche fonctionnelle 120 est disposée entre les revêtements antireflet 100, 140.

Ces revêtements antireflet 20, 60, 100, 140, comportent chacun au moins une couche diélectrique 24, 26, 28 ; 62, 64, 66, 68 ; 102, 104, 106, 108 ; 142, 144.

Eventuellement, d'une part chaque couche fonctionnelle 40, 80, 120, peut être déposée sur un revêtement de sous-blocage (non illustré) disposé entre le revêtement antireflet sous-jacent et la couche fonctionnelle et d'autre part chaque couche fonctionnelle peut être déposée directement sous un revêtement de sur-blocage 55, 95, 135 disposé entre la couche fonctionnelle et le revêtement antireflet sus-jacent à cette couche.

Un premier exemple a été réalisé en suivant l'exemple 14 de la demande internationale de brevet N° WO 2005/051858 et en utilisant par ailleurs l'enseignement de la demande internationale de brevet N° WO 2007/101964, avec une couche de lissage 26 en oxyde mixte de zinc et d'étain insérée dans le premier revêtement antireflet 20 en partant du substrat 10, le revêtement sous-jacent à la première couche fonctionnelle métallique, entre d'une part une couche barrière (référencée 24) en nitrure de silicium qui se trouve être ici déposée directement sur le substrat 10 et une couche de mouillage 28 en oxyde de zinc.

Trois exemples ont été réalisés, numérotées de 1 à 3 ci-après. Ils ont tous les trois été incorporés dans un vitrage feuilleté de structure : substrat en verre porteur de l'empilement / feuille intercalaire en PVB / substrat en verre.

Le tableau 1 suivant résume les matériaux et les épaisseurs de chaque couche et de chaque élément de la structure feuilletée en fonction de sa position vis-à-vis du substrat porteur de l'empilement (dernière ligne du tableau) ; les numéros de la 2^{e} colonne correspondent aux références de la figure 1.

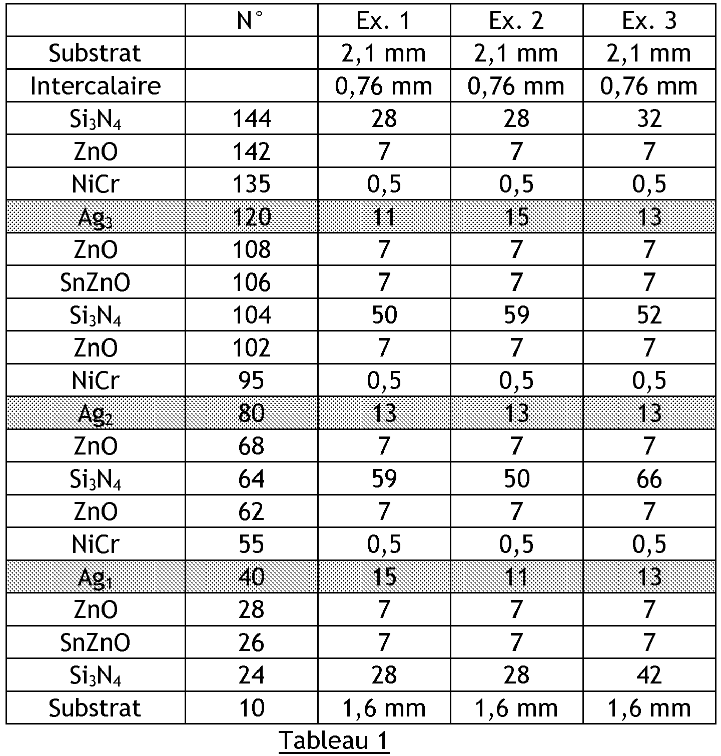

Dans tous les exemples ci-après l'empilement de couches minces est déposé sur un substrat en verre sodo-calcique clair d'une épaisseur de 1,6 mm, distribué par la société SAINT-GOBAIN.

Chaque revêtement antireflet 20, 60, 100 sous-jacent à une couche fonctionnelle 40, 80, 120 comporte une dernière couche de mouillage 28, 68, 108 à base d'oxyde de zinc cristallisé, dopé à l'aluminium et qui est au contact de la couche fonctionnelle 40, 80, 120 déposée juste au-dessus.

Comme visible dans le tableau 1, le premier revêtement antireflet 20 sous-jacent à la première couche fonctionnelle 40 et le 3^{e} revêtement antireflet 100 sous-jacent à la 3^{e} couche fonctionnelle 120 comporte une couche de lissage 26, 106, en un oxyde mixte non cristallisé, chaque couche de lissage 26, 106 étant en contact avec chaque couche de mouillage 28, 108 sus-jacente.

L'épaisseur e₂₆ de la couche de lissage 26 représente environ 1/6^{e} de l'épaisseur dudit premier revêtement antireflet 20 et environ la moitié de l'épaisseur de ladite première couche fonctionnelle 40.

L'épaisseur e₁₀₆ de la couche de lissage 106 est identique à l'épaisseur e₂₆ de la couche de lissage 26.

L'autre revêtement antireflet 60, sous-jacent à une couche fonctionnelle 80, pourrait aussi comprendre au moins une couche de lissage 66, en un oxyde mixte non cristallisé, en contact avec une couche de mouillage 68, 108 sus-jacente, comme en figure 1 ; mais ce n'est pas le cas pour les exemples 1 à 3 pour des raisons de disponibilité d'emplacement de cathode dans le bâti de dépôt utilisé.

Chaque revêtement antireflet 20, 60, 100, 140 comporte une couche 24, 64, 104, 144 à base de nitrure de silicium, dopé à l'aluminium. Ces couches sont importantes pour obtenir l'effet barrière à l'oxygène lors du traitement thermique.

Sur la figure 1 on constate que l'empilement se termine par une couche de protection optionnelle 200, qui n'est pas présente pour les exemples 1 à 3.

Pour chacun des trois exemples, les conditions de dépôt des couches, qui ont été déposées par pulvérisation (pulvérisation dite « cathodique magnétron »), sont les suivantes :

**Tableau 2**

| Couche | Cible employée | Pression de dépôt | Gaz |
|---|---|---|---|
| Si₃N₄ | Si:Al à 92:8 % wt | 1,5.10⁻³ mbar | Ar /(Ar + N2) à 45 % |
| SnZnO | SnZn:Sb à 34:65:1 wt | 2.10⁻³ mbar | Ar /(Ar + O2) à 58 % |
| ZnO | Zn:Al à 98:2 % wt | 2.10⁻³ mbar | Ar /(Ar + O2) à 52 % |
| NiCr | NiCr à 80:20 wt | 2.10⁻³ mbar | Ar à 100 % |
| Ag | Ag | 2.10⁻³ mbar | Ar à 100 % |

L'exemple 1 est un exemple selon l'invention car la distribution de l'épaisseur des couches fonctionnelles est décroissante en partant du substrat porteur : e₁ > e₂ > e₃, avec e₂ = α e₁ et e₃ = α' e₂.

α = 0,87 et α' = 0,85 ; ils sont ici sensiblement différents à 0,02 près.

L'exemple 2 n'est pas un exemple selon l'invention car la distribution de l'épaisseur des couches fonctionnelles est croissante en partant du substrat porteur : e₁ < e₂ < e₃, avec e₂ = β e₁ et e₃ = β' e₂.

β = 1,18 et β' = 1,15 ; ils ne sont pas identiques.

L'exemple 3 n'est pas non plus un exemple selon l'invention car la distribution de l'épaisseur des couches fonctionnelles est constante dans l'empilement : e₁ = e₂ = e₃.

Ces trois empilements présentent de plus l'avantage d'être trempables.

La somme des épaisseurs de toutes les couches fonctionnelles de l'exemple 1 est identique à la somme des épaisseurs de toutes les couches fonctionnelles de l'exemple 2 et de l'exemple 3 : e₁ + e₂ + e₃ de l'exemple 1 = e₁ + e₂ + e₃ de l'exemple 2 ou de l'exemple 3 = 39 nm.

Ces trois exemples présentant la même épaisseur totale de couche fonctionnelle, ils devraient présenter, normalement, les mêmes résistances par carré et conséquemment les mêmes caractéristiques de réflexion énergétique et de transmission énergétique.

Toutefois, ce n'est pas ce qui a été constaté. Le tableau 3 résume pour les exemples 1 à 3la résistance par carré mesurée pour chaque substrat porteur de l'empilement après traitement thermique (bombage à 640°) et les principales caractéristiques optiques mesurées pour le vitrage feuilleté complet intégrant le substrat porteur de l'empilement :

**Tableau 3**

| | R (Ohm/carré) | T_{L} (%) | R_{L} (%) | a_{R0}* | b_{R0}* | a_{R60}* | b_{R60}* |
|---|---|---|---|---|---|---|---|
| Ex. 1 | 0,98 | 73,3 | 12,4 | -4,1 | -5,1 | -5,5 | -0,2 |
| Ex. 2 | 1,05 | 67,8 | 12,5 | -5,8 | -5,7 | -3,7 | -1,7 |
| Ex. 3 | 1 | 69,3 | 16,7 | -4,9 | -5,6 | -7,2 | +0,2 |

Pour ces substrats,
- R indique : la résistance par carré de l'empilement, en ohms par carré après traitement thermique (bombage) ;
- T_{L} indique : la transmission lumineuse dans le visible en %, mesurée selon l'illuminant A à 10° Observateur ;
- a_{R0}* et b_{R0}* indiquent les couleurs en réflexion a* et b* dans le système LAB mesurées selon l'illuminant D65 à 10° Observateur et mesurées ainsi sensiblement perpendiculairement au vitrage ;
- a_{Rb0}* et b_{R60}* indiquent les couleurs en réflexion a* et b* dans le système LAB mesurées selon l'illuminant D65 à 10° Observateur et mesurées sensiblement avec un angle de 60° par rapport à la perpendiculaire au vitrage.

On constate ainsi que si l'exemple 3 donne satisfaction en termes de résistance par carré de l'empilement et de transmission lumineuse, sa réflexion lumineuse est relativement élevée et il ne présente pas une stabilité de couleur en réflexion et en angle : la différence entre les valeurs de couleurs mesurées à 0° et les valeurs de couleurs mesurées à 60° est trop importante et la valeur de a_{R60}* est trop élevée.

L'exemple 2 présente de meilleurs caractéristiques optiques que l'exemple 3 avec en particulier une couleur en réflexion à 60° moins marquée (a_{R60}* moins élevé), mais la transmission lumineuse s'est dégradée et surtout la résistance par carré est supérieure à 1 Ohm/carré, ce qui n'est pas acceptable.

L'exemple 1 présente une résistance par carré de l'empilement et de transmission lumineuse améliorées par rapport à celles de l'exemple 3 et bien sûr de l'exemple 2, une réflexion lumineuse plus faible que celle de l'exemple 3 et une meilleure stabilité de la couleur en réflexion en fonction de l'angle que l'exemple 3.

Il a été mesuré que la couche fonctionnelle 40 de chacun de ces exemples est de meilleure qualité que les autres couches fonctionnelles 80, 120, ... : elle présente une rugosité plus faible et est mieux cristallisée que les autres.

Du fait de l'épaisseur totale importante des couches d'argent (et donc de la faible résistance par carré obtenue) ainsi que des bonnes propriétés optiques (en particulier la transmission lumineuse dans le visible), il est possible, par ailleurs d'utiliser le substrat revêtu de l'empilement selon l'invention pour réaliser un substrat électrode transparent.

Ce substrat électrode transparent peut convenir pour un dispositif électroluminescent organique, en particulier en remplaçant la couche 144 en nitrure de silicium de l'exemple 1 par une couche conductrice (avec en particulier une résistivité inférieure à 10⁵ Ω.cm) et notamment une couche à base d'oxyde. Cette couche peut être par exemple en oxyde d'étain ou à base d'oxyde de zinc éventuellement dopé Al ou Ga, ou à base d'oxyde mixte et notamment d'oxyde d'Indium et d'étain ITO, d'oxyde d'Indium et de zinc IZO, d'oxyde d'étain et de zinc SnZn éventuellement dopé (par exemple avec Sb, F). Ce dispositif électroluminescent organique peut être utilisé pour réaliser un dispositif d'éclairage ou un dispositif de visualisation (écran).

La figure 2 illustre une structure d'empilement à quatre couches fonctionnelles 40, 80, 120, 160, cette structure étant déposée sur un substrat 10 verrier, transparent.

Chaque couche fonctionnelle 40, 80, 120, 160, est disposée entre deux revêtements antireflet 20, 60, 100, 140, 180, de telle sorte que la première couche fonctionnelle 40 en partant du substrat est disposée entre les revêtements antireflet 20, 60 ; la deuxième couche fonctionnelle 80 est disposée entre les revêtements antireflet 60, 100 ; la troisième couche fonctionnelle 120 est disposée entre les revêtements antireflet 100, 140 ; et la quatrième couche fonctionnelle 160 est disposée entre les revêtements antireflet 140, 180.

Ces revêtements antireflet 20, 60, 100, 140, 180, comportent chacun au moins une couche diélectrique 24, 26, 28 ; 62, 64, 66, 68 ; 102, 104, 106, 108 ; 144, 146, 148 ; 182, 184.

Eventuellement, d'une part chaque couche fonctionnelle 40, 80, 120, 160, peut être déposée sur un revêtement de sous-blocage 35, 75, 115, 155, disposé entre le revêtement antireflet sous-jacent et la couche fonctionnelle et d'autre part chaque couche fonctionnelle peut être déposée directement sous un revêtement de sur-blocage (non illustré) disposé entre la couche fonctionnelle et le revêtement antireflet sus-jacent.

Sur la figure 2 on constate que l'empilement se termine par une couche de protection optionnelle 200, en particulier à base d'oxyde, notamment sous stoechiométrique en oxygène.

Chaque revêtement antireflet 20, 60, 100, 140 sous-jacent à une couche fonctionnelle 40, 80, 120, 160 comporte une dernière couche de mouillage 28, 68, 108, 148 à base d'oxyde de zinc cristallisé, dopé à l'aluminium et qui est au contact de la couche fonctionnelle 40, 80, 120, 160 déposée juste au-dessus.

Chaque revêtement antireflet 20, 60, 100, 140 sous-jacent à une couche fonctionnelle 40, 80, 120, 160 peut par ailleurs comporter une couche de lissage 26, 66, 106, 146, en un oxyde mixte non cristallisé, chaque couche de lissage 26, 66, 106, 146 étant en contact avec chaque couche de mouillage 28, 68, 108, 148 sus-jacente.

Chaque revêtement antireflet 20, 60, 100, 140, 180 comporte une couche 24, 64, 104, 144, 184 à base de nitrure de silicium, dopé à l'aluminium. Ces couches sont importantes pour obtenir l'effet barrière à l'oxygène lors du traitement thermique.

D'une manière générale, le substrat électrode transparent peut convenir comme substrat chauffant pour un vitrage chauffant et en particulier un pare-brise feuilleté chauffant.

Il peut aussi convenir comme substrat électrode transparent pour tout vitrage électrochrome, tout écran de visualisation, ou encore pour une cellule photovoltaïque et notamment pour une face avant ou une face arrière de cellule photovoltaïque transparente.

La présente invention est décrite dans ce qui précède à titre d'exemple. Il est entendu que l'homme du métier est à même de réaliser différentes variantes de l'invention sans pour autant sortir du cadre du brevet tel que défini par les revendications.

## Revendications

1. Substrat (10), notamment substrat verrier transparent, muni d'un empilement de couches minces comportant une alternance de « n » couches fonctionnelles (40, 80, 120) métalliques, notamment de couches fonctionnelles à base d'argent ou d'alliage métallique contenant de l'argent, et de « (n + 1) » revêtements antireflet (20, 60, 100, 140), avec n nombre entier = 3 ou 4, chaque revêtement antireflet comportant au moins une couche antireflet (24, 64, 104, 144), de manière à ce que chaque couche fonctionnelle (40, 80, 120) soit disposée entre deux revêtements antireflet (20, 60, 100, 140), ***caractérisé en ce que*** l'épaisseur eₓ de chaque couche fonctionnelle (80, 120) est inférieure à l'épaisseur de la couche fonctionnelle précédente en direction du substrat (10) et est telle que : eₓ = α eₓ₋₁, avec :
* x qui est le rang de la couche fonctionnelle en partant du substrat (10),
* x-1 qui est le rang de la couche fonctionnelle précédente en direction du substrat (10)
* α qui est un nombre tel que 0,55 ≤ α ≤ 0,95, voire 0,6 ≤ α ≤ 0,95 et
* l'épaisseur de la première couche métallique fonctionnelle en partant du substrat telle que : 10 ≤ e₁ ≤ 18 en nm, et de préférence 11 ≤ e₁ ≤ 15 en nm.

2. Substrat (10) selon la revendication 1, ***caractérisé en ce que*** la valeur de α est différent pour toutes les couches fonctionnelles de rang 2 et plus.

3. Substrat (10) selon la revendication 1 ou 2, ***caractérisé en ce que*** la dernière couche du premier revêtement antireflet (20) sous-jacent à la première couche fonctionnelle (40) en partant du substrat (10) est une couche de mouillage (28) à base d'oxyde cristallisé, notamment à base d'oxyde de zinc, éventuellement dopé à l'aide d'au moins un autre élément, comme l'aluminium ***et en ce que*** ce premier revêtement antireflet (20) sous-jacent à la première couche fonctionnelle (40) comporte une couche de lissage (26), en un oxyde mixte non cristallisé, ladite couche de lissage (26) étant en contact avec ladite couche de mouillage (28) sus-jacente.

4. Substrat (10) selon la revendication 3, ***caractérisé en ce que*** l'épaisseur e₂₆ de ladite couche de lissage (26) représente environ 1/6^{e} de l'épaisseur dudit premier revêtement antireflet (20) et environ la moitié de l'épaisseur de ladite première couche fonctionnelle (40).

5. Substrat (10) selon l'une quelconque des revendications 1 à 4, ***caractérisé en ce que*** l'épaisseur totale des couches métalliques fonctionnelles est de préférence supérieure à 30 nm et est notamment comprise entre 30 et 60 nm en incluant ces valeurs, voire cette épaisseur totale est comprise entre 35 et 50 nm pour un empilement de couches minces à trois couches fonctionnelles, voire cette épaisseur totale est comprise entre 40 et 60 nm pour un empilement de couches minces à quatre couches fonctionnelles.

6. Substrat (10) selon l'une quelconque des revendications 1 à 5, ***caractérisé en ce que*** lesdits revêtements antireflet (20, 60, 100, 140) comportent chacun au moins une couche (24, 64, 104, 144) à base de nitrure de silicium, éventuellement dopé à l'aide d'au moins un autre élément, comme l'aluminium.

7. Substrat (10) selon l'une quelconque des revendications 1 à 6, ***caractérisé en ce que*** la dernière couche de chaque revêtement antireflet sous-jacent à une couche fonctionnelle (40, 80, 120) est une couche de mouillage (28, 68, 108) à base d'oxyde cristallisé, notamment à base d'oxyde de zinc, éventuellement dopé à l'aide d'au moins un autre élément, comme l'aluminium.

8. Substrat (10) selon la revendication 7, ***caractérisé en ce que*** au moins un revêtement antireflet sous-jacent à une couche fonctionnelle (40, 80, 120) comprend au moins une couche de lissage (26, 66, 106), en un oxyde mixte non cristallisé, ladite couche de lissage (26, 66, 106) étant en contact avec une couche de mouillage (28, 68, 108) sus-jacente.

9. Vitrage incorporant au moins un substrat (10) selon l'une quelconque des revendications 1 à 8, éventuellement associé à au moins un autre substrat et notamment vitrage multiple du type double-vitrage ou triple vitrage ou vitrage feuilleté et en particulier vitrage feuilleté comportant des moyens pour la connexion électrique de l'empilement de couches minces afin de permettre de réaliser un vitrage feuilleté chauffant, ledit substrat porteur de l'empilement pouvant être bombé et/ou trempé.

10. Utilisation du substrat selon l'une quelconque des revendications 1 à 8, pour réaliser un revêtement transparent chauffant d'un vitrage chauffant ou une électrode transparente d'un vitrage électrochrome ou d'un dispositif d'éclairage ou d'un dispositif de visualisation ou d'un panneau photovoltaïque.

## Patentansprüche

1. Substrat (10), insbesondere ein transparentes Glassubstrat, das mit einem Stapel dünner Schichten, der abwechselnd "n" metallische Funktionsschichten (40, 80, 120), insbesondere Funktionsschichten auf der Basis von Silber oder einer Metalllegierung mit Silber, umfasst, und mit "(n + 1)" Antireflexbeschichtungen (20, 60, 100, 140) mit n ganzen Zahlen = 3 oder 4 versehen ist, wobei jede Antireflexbeschichtung mindestens eine Antireflexschicht (24, 64, 104, 144) enthält, sodass jede Funktionsschicht (40, 80, 120) zwischen zwei Antireflexbeschichtungen (20, 60, 100, 140) angeordnet ist, ***dadurch gekennzeichnet, dass*** die Dicke eₓ jeder Funktionsschicht (80, 120) kleiner als die Dicke der vorhergehenden Funktionsschicht in Richtung des Substrats (10) ist, und zwar derart, dass: eₓ = α eₓ₋₁ ist, mit:
* x, das der Rang der Funktionsschicht ist, ausgehend vom Substrat (10),
* x-1, das der Rang der vorhergehenden Funktionsschicht in Richtung des Substrats (10) ist
* α, das eine Zahl wie 0,55 ≤ α ≤ 0,95, sogar 0,6 ≤ α ≤ 0,95 ist, und
* wobei die Dicke der ersten metallischen Funktionsschicht ausgehend von dem Substrat, dergestalt ist, dass: 10 ≤ e₁ ≤ 18 in nm und vorzugsweise 11 ≤ e₁ ≤ 15 in nm.

2. Substrat (10) nach Anspruch 1, ***dadurch gekennzeichnet, dass* der** Wert von a für alle Funktionsschichten ab Rang 2 unterschiedlich ist.

3. Substrat (10) nach Anspruch 1 oder 2, ***dadurch gekennzeichnet, dass*** die letzte Schicht der ersten Antireflexbeschichtung (20) unter der ersten Funktionsschicht (40) ausgehend vom Substrat (10) eine Benetzungsschicht (28) auf Basis von kristallisiertem Oxid ist, insbesondere auf Basis von Zinkoxid, gegebenenfalls mit mindestens einem weiteren Element wie Aluminium dotiert und ***dadurch gekennzeichnet, dass*** diese erste Antireflexbeschichtung (20) unter der ersten Funktionsschicht (40) eine Glättungsschicht (26) umfasst in einem nichtkristallisierten Mischoxid, wobei die Glättungsschicht (26) in Kontakt mit der darüber liegenden Benetzungsschicht (28) steht.

4. Substrat (10) nach Anspruch 3, ***dadurch gekennzeichnet, dass*** die Dicke e₂₆ der Glättungsschicht (26) etwa 1/6 der Dicke der ersten Antireflexbeschichtung (20) und etwa die Hälfte der Dicke der ersten Funktionsschicht (40) beträgt.

5. Substrat (10) nach einem der Ansprüche 1 bis 4, ***dadurch gekennzeichnet, dass*** die Gesamtdicke der metallischen Funktionsschichten vorzugsweise größer als 30 nm ist und insbesondere zwischen 30 und 60 nm einschließlich dieser Werte liegt. Selbst diese Gesamtdicke beträgt für einen Stapel dünner Schichten mit drei Funktionsschichten zwischen 35 und 50 nm, für einen Stapel dünner Schichten mit vier Funktionsschichten beträgt sogar diese Gesamtdicke zwischen 40 und 60 nm.

6. Substrat (10) nach einem der Ansprüche 1 bis 5, ***dadurch gekennzeichnet, dass*** die Antireflexbeschichtungen (20, 60, 100, 140) jeweils mindestens eine Schicht (24, 64, 104, 144) auf Basis von Siliciumnitrid aufweisen, gegebenenfalls mit mindestens einem anderen Element wie Aluminium dotiert.

7. Substrat (10) nach einem der Ansprüche 1 bis 6, ***dadurch gekennzeichnet, dass*** die unter einer Funktionsschicht (40, 80, 120) liegende letzte Schicht jeder Antireflexbeschichtung eine Benetzungsschicht (28, 68, 108) auf Basis von kristallisiertem Oxid, insbesondere auf der Basis von Zinkoxid ist, gegebenenfalls mit mindestens einem anderen Element wie Aluminium dotiert.

8. Substrat (10) nach Anspruch 7, ***dadurch gekennzeichnet, dass*** mindestens eine Antireflexbeschichtung unter einer Funktionsschicht (40, 80, 120) mindestens eine Glättungsschicht (26, 66, 106) umfasst in einem nichtkristallisierten Mischoxid, wobei die Glättungsschicht (26, 66, 106) in Kontakt mit einer darüber liegenden Benetzungsschicht (28, 68, 108) steht.

9. Verglasung mit mindestens einem Substrat (10) nach einem der Ansprüche 1 bis 8, gegebenenfalls verbunden mit mindestens einem weiteren Substrat und insbesondere Mehrfachverglasung als Doppelverglasung oder Dreifachverglasung oder Verbundverglasung und insbesondere Verbundverglasung mit Mitteln zur elektrischen Verbindung des Stapels dünner Schichten, um eine beheizte Verbundverglasung herstellen zu können, wobei das Trägersubstrat des Stapels gewölbt und/oder gehärtet sein kann.

10. Verwendung des Substrats nach einem der Ansprüche 1 bis 8 zur Herstellung einer transparenten Heizbeschichtung einer Heizverglasung oder einer transparenten Elektrode einer elektrochromen Verglasung oder einer Beleuchtungsvorrichtung oder einer Anzeigevorrichtung oder eines Photovoltaikmoduls.

## Claims

1. A substrate (10), especially a transparent glass substrate, provided with a thin-film multilayer comprising an alternation of "n" metallic functional layers (40, 80, 120) especially of functional layers based on silver or a metal alloy containing silver, and of "(n + 1)" antireflection coatings (20, 60, 100, 140), with n being an integer = 3 or 4, each antireflection coating comprising at least one antireflection layer (24, 64, 104, 144), so that each functional layer (40, 80, 120) is positioned between two antireflection coatings (20, 60, 100, 140), ***characterized in that*** the thickness eₓ of each functional layer (80, 120) is less than the thickness of the preceding functional layer in the direction of the substrate (10) and is such that: eₓ = α eₓ₋₁, with:
* x which is the row of the functional layer starting from the substrate (10),
* x-1 which is the row of the preceding functional layer in the direction of the substrate (10),
* α which is a number such that 0.55 ≤ α ≤ 0.95, or even 0.6 ≤ α ≤ 0.95, and
* the thickness of the first metallic functional layer starting from the substrate is such that: 10 ≤ e₁ ≤ 18 in nm, and preferably 11 ≤ e₁ ≤ 15 in nm.

2. The substrate (10) as claimed in claim 1, ***characterized in that*** the value of α is different for all the functional layers of row 2 and higher.

3. The substrate (10) as claimed in claim 1 or 2, ***characterized in that*** the last layer of the first antireflection coating (20) subjacent to the first functional layer (40) starting from the substrate (10) is a wetting layer (28) based on crystalline oxide, especially based on zinc oxide, optionally doped with the aid of at least one other element, such as aluminum ***and in that*** this first antireflection coating (20) subjacent to the first functional layer (40) comprises a smoothing layer (26), made of a non-crystalline mixed oxide, said smoothing layer (26) being in contact with said superjacent wetting layer (28).

4. The substrate (10) as claimed in claim 3, ***characterized in that*** the thickness e₂₆ of said smoothing layer (26) represents around 1/6 of the thickness of said first antireflection coating (20) and around half the thickness of said first functional layer (40).

5. The substrate (10) as claimed in any one of claims 1 to 4, ***characterized in that*** the total thickness of the metallic functional layers is preferably greater than 30 nm and is in particular between 30 and 60 nm including these values, or even this total thickness is between 35 and 50 nm for a thin-film multilayer having three functional layers, or even this total thickness is between 40 and 60 nm for a thin-film multilayer having four functional layers.

6. The substrate (10) as claimed in any one of claims 1 to 5, ***characterized in that*** said antireflection coatings (20, 60, 100, 140) each comprise at least one layer (24, 64, 104, 144) based on silicon nitride, optionally doped with the aid of at least one other element, such an aluminum.

7. The substrate (10) as claimed in any one of claims 1 to 6, ***characterized in that*** the last layer of each antireflection coating subjacent to a functional layer (40, 80, 120) is wetting layer (28, 68, 108) based on crystalline oxide, especially based on zinc oxide, optionally doped with the aid of at least one other element, such as aluminum.

8. The substrate (10) as claimed in claim 7, ***characterized in that*** at least one antireflection coating subjacent to a functional layer (40, 80, 120) comprises at least one smoothing layer (26, 66, 106), made of a non-crystalline mixed oxide, said smoothing layer (26, 66, 106) being in contact with a superjacent wetting layer (28, 68, 108).

9. A glazing unit incorporating at least one substrate (10) as claimed in any one of claims 1 to 8, optionally combined with at least one other substrate and especially a multiple glazing unit of the double-glazing or triple-glazing or laminated-glazing type and in particular laminated glazing comprising means for the electrical connection of the thin-film multilayer in order to make it possible to produce a heated laminated glazing unit, said substrate bearing the multilayer possibly being bent and/or tempered.

10. The use of the substrate as claimed in any one of claims 1 to 8 for producing a heated transparent coating of a heated glazing unit or a transparent electrode of an electrochromic glazing unit or of a lighting device or of a display device or of a photovoltaic panel.
